(19) Europäisches Patentamt / European Patent Office / Office européen des brevets

(11) **EP 4 099 532 A1**

(12) **DEMANDE DE BREVET EUROPEEN**

(43) Date de publication:
**07.12.2022 Bulletin 2022/49**

(21) Numéro de dépôt: **22176821.1**

(22) Date de dépôt: **01.06.2022**

(51) Classification Internationale des Brevets (IPC):
**H02J 1/10** (2006.01)   **B60L 50/75** (2019.01)
**B60L 58/40** (2019.01)   **H02J 7/02** (2016.01)
B60L 53/24 (2019.01)   H02M 1/00 (2006.01)
H02M 1/10 (2006.01)   H02M 1/42 (2007.01)
H02M 3/00 (2006.01)   H02M 3/158 (2006.01)
H02M 3/335 (2006.01)   H02M 7/5387 (2007.01)

(52) Classification Coopérative des Brevets (CPC):
**H02J 1/102; B60L 50/75; B60L 58/40; H02J 7/02;**
**H02M 1/10; H02M 3/158;** B60L 53/24;
H02J 2207/20; H02J 2310/48; H02M 1/007;
H02M 1/008; H02M 1/4233; H02M 3/01;
H02M 3/1582; H02M 3/33573;      (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **01.06.2021 FR 2105757**

(71) Demandeur: **Renault s.a.s**
**92100 Boulogne Billancourt (FR)**

(72) Inventeur: **LOUDOT, SERGE**
**78084 GUYANCOURT (FR)**

(54) **SYSTÈME D'ALIMENTATION ÉLECTRIQUE D'AU MOINS UNE MACHINE ÉLECTRIQUE DE TRACTION D'UN VÉHICULE AUTOMOBILE ALIMENTÉE PAR AU MOINS DEUX SOURCES DE PUISSANCE**

(57) Procédé de commande d'un système d'alimentation électrique d'au moins une machine électrique de traction (M) d'un véhicule automobile électrique alimentée par au moins deux sources de puissance différentes (2a,2b,2c), le système d'alimentation électrique (1) étant connecté entre les sources de puissance (2a,2b,2c) et ladite au moins une machine électrique (M), et comprenant un convertisseur continu-continu (5a,5b,5c) pour chaque source de puissance (2a,2b,2c) connectés en parallèle à une même capacité haute tension (6) et à la au moins une machine électrique (M) associée à un onduleur, les convertisseurs continu-continu étant élévateurs de tension, l'un des convertisseurs continu-continu étant également abaisseur de tension, le procédé de commande comprenant les étapes suivantes : on détermine une consigne de tension du réseau haute tension du véhicule, on mesure la tension du réseau haute tension du véhicule et on détermine l'écart entre la consigne et la mesure de la tension du réseau haute tension.

[Fig 1]

EP 4 099 532 A1

(52) Classification Coopérative des Brevets (CPC):
(Cont.)
H02M 7/5387

## Description

### Domaine technique

L'invention a pour domaine technique le contrôle des flux d'énergie électrique à bord d'un véhicule automobile.

### Techniques antérieures

Les véhicules à propulsion électrique peuvent comprendre plusieurs sources d'énergie, notamment une batterie et une pile à combustible ou plusieurs batteries interchangeables. De fait, ces multiples sources d'énergie doivent fréquemment fonctionner en parallèle alors qu'elles fournissent une tension différente les unes des autres. Classiquement, on connecte la source la moins puissante via un convertisseur continu-continu (convertisseur DC/DC) de façon à s'adapter à la tension de la source la plus puissante, qui impose également la tension à la propulsion électrique (onduleur et moteur).

Lorsqu'une pile à combustible est utilisée en tant que prolongateur d'autonomie d'un véhicule électrique à batteries, les puissances électriques de la pile à combustible et des batteries peuvent être proches et ces systèmes peuvent donc être utilisées indifféremment.

Le prolongateur d'autonomie correspond à l'ajout d'une pile à combustible sur un véhicule électrique dont la taille de la batterie est optimisée (réduite). Dans ce cas d'architecture, le véhicule peut fonctionner uniquement sur la batterie pour de faibles temps de parcours ou grâce à la combinaison de la pile à combustible et de la batterie pour des longs trajets par exemple. Dans ce cas, le système pile à combustible et la batterie génèrent la puissance électrique nécessaire à l'avancement du véhicule.

Par opposition, l'architecture classique d'un véhicule à pile à combustible (type Hyundai Nexo par exemple) comprend une batterie connectée en parallèle à la pile à combustible par un convertisseur DC/DC. La chaine de traction est alimentée avec la tension de la pile à combustible et subit ses variations. Cette configuration comporte plusieurs inconvénients :

- La chaine de traction électrique subit les variations de tension de la source la plus puissante ce qui a un effet sur le rendement et la puissance maximale de la chaine de traction.

Le rendement est dépendant de la tension d'alimentation. Un pilotage dynamique de la tension d'alimentation permettrait de réduire les pertes globales sur un cycle de roulage et de fait limiter l'échauffement de la chaine de traction. Ce gain de rendement permet notamment, lors de cycles de roulage où la puissance moyenne est élevée, de retarder le moment où la chaine de traction limite sa puissance pour contenir son échauffement. On améliore ainsi la valeur client de la chaine de traction.

La puissance maximale de la chaine de traction est dépendante de la tension d'alimentation. De fait, dans les cas où cette tension est faible, la puissance accessible par la chaine de traction est dégradée. D'autre part, pour limiter l'occurrence d'apparition de ce déclassement de puissance, le dimensionnement de la machine de traction est réalisé pour fournir la pleine puissance à une tension assez basse dans la gamme (par exemple, on dimensionne la chaine de traction pour fournir la pleine puissance à 330 V lorsqu'elle est alimentée par une batterie variant de 240 V à 410 V). Ce compromis de dimensionnement se fait au détriment de l'onduleur en augmentant le courant de phase et donc le coût de l'onduleur.

- En cas de besoin de recharger la batterie, un chargeur adapté à la tension de la batterie est nécessaire (sans déclassement de prestations). Si plusieurs batteries de tensions ou chimie différente coexistent, plusieurs chargeurs sont nécessaires (ou à minima plusieurs convertisseurs DC/DC alimentés par un unique redresseur).

De l'état de la technique antérieure, on connait les documents suivants.

Le document WO2016/079603 présente un convertisseur DC/DC multi phases avec une phase en topologie abaisseur-élévateur et les deux autres en topologie élévateur. Un contact mécanique sépare les phases uniquement élévateur du circuit lorsque la tension d'entrée est supérieure à celle de la sortie de façon à assurer un transfert d'énergie à puissance réduite. Il n'est pas précisé la possibilité de connecter en parallèle plusieurs sources. De même la possibilité de charge, ou apport d'énergie par un réseau alternatif n'est pas documentée.

Le document US4415959 décrit une fonction DC/DC sans pertes par commutation des transistors en utilisant un transfert d'énergie entre une inductance et une capacité. Cette solution requiert une boucle de régulation entre primaire et secondaire pour fonctionner.

Le document FR3100941 décrit un dispositif stationnaire dédié à la recharge des véhicules qui comprend plusieurs sources d'énergie (photovoltaïque, batterie stationnaire et réseau domestique via un étage de redressement) pouvant être ou non simultanément disponibles. Ce document présente le pilotage d'un bus continu alimenté par plusieurs sources distinctes ainsi qu'un système de recharge par couplage inductif.

### Exposé de l'invention

L'invention a pour objet un procédé de commande d'un système d'alimentation électrique d'au moins une machine électrique de traction d'un véhicule automobile électrique alimentée par au moins deux sources de puissance différentes, le système d'alimentation électrique étant connecté entre les sources de puissance et ladite au moins une machine électrique, le système d'alimentation électrique comprenant un convertisseur continu-continu pour chaque source de puissance, les convertisseurs continu-continu étant connectés en parallèle à une même capacité haute tension et à la au moins une machine électrique associée à un onduleur, les convertisseurs continu-continu étant élévateurs de tension, l'un des convertisseurs continu-continu étant également abaisseur de tension, le procédé de commande comprenant les étapes suivantes : on détermine une consigne de tension du réseau haute tension du véhicule, on mesure la tension du réseau haute tension du véhicule et on détermine l'écart entre la consigne et la mesure de la tension du réseau haute tension, on détermine une puissance globale à transférer au réseau haute tension par un contrôle comprenant au moins une composante intégrale fonction de l'écart déterminé, on détermine une consigne de puissance à fournir pour chaque source en fonction de la puissance globale à transférer au réseau haute tension, de la capacité de chaque source et d'une pondération dépendant d'une optimisation selon un critère prédéterminé, puis , on commande les convertisseurs continu-continu en fonction de la consigne de puissance qui leur est attribuée.

Le critère peut être le rendement global ou la durabilité des sources.

On peut commander le convertisseur continu-continu d'une source de puissance en régulation de tension, le convertisseur continu-continu des autres sources de puissance étant commandées en régulation de puissance.

Lorsque le système de charge comprend un chargeur résonant et dans lequel au moins une source de puissance est une batterie, le procédé de commande peut comprendre une étape de recharge de la au moins une batterie par l'intermédiaire d'un convertisseur continu-continu et du chargeur résonant connecté à un réseau d'alimentation électrique.

Lorsque le chargeur résonant comprend une structure symétrique, le procédé de commande peut comprendre une étape de pilotage du chargeur résonant permettant d'injecter une puissance électrique dans un réseau d'alimentation électrique ou une charge, connectés au chargeur résonant à partir d'au moins une source de puissance du véhicule.

On peut réaliser une compensation de puissance en pilotant un convertisseur continu-continu relié en parallèle d'une capacité connectée en parallèle de la sortie d'un correcteur de facteur de puissance du chargeur résonant.

On peut commander le chargeur résonant avec commutation sans pertes et déphasage nul.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :

- La figure 1 illustre les principaux éléments d'un système d'alimentation électrique,
- La figure 2 illustre les principaux éléments d'un convertisseur continu-continu d'un système d'alimentation électrique,
- La figure 3 illustre les principaux éléments d'un système d'alimentation électrique selon un autre mode de réalisation,
- La figure 4 illustre les principales étapes d'un procédé de commande d'un système d'alimentation électrique,
- La figure 5 illustre les principaux éléments d'un chargeur résonant d'un système d'alimentation électrique,
- La figure 6 illustre les principaux éléments d'un chargeur résonant muni d'une compensation de puissance instantanée, et
- La figure 7 illustre les principaux éléments d'un chargeur résonant bidirectionnel d'un système d'alimentation électrique,

### Description détaillée

Le système d'alimentation électrique 1 selon l'invention permet d'assurer des transferts d'énergie entre plusieurs sources d'énergie embarquées, alimentant le réseau haute tension d'un véhicule automobile électrifié rechargeable. Ce réseau haute tension est le réseau alimentant grâce à ces sources d'énergie, la machine électrique de traction du véhicule, par opposition au réseau de bord du véhicule de plus basse tension.

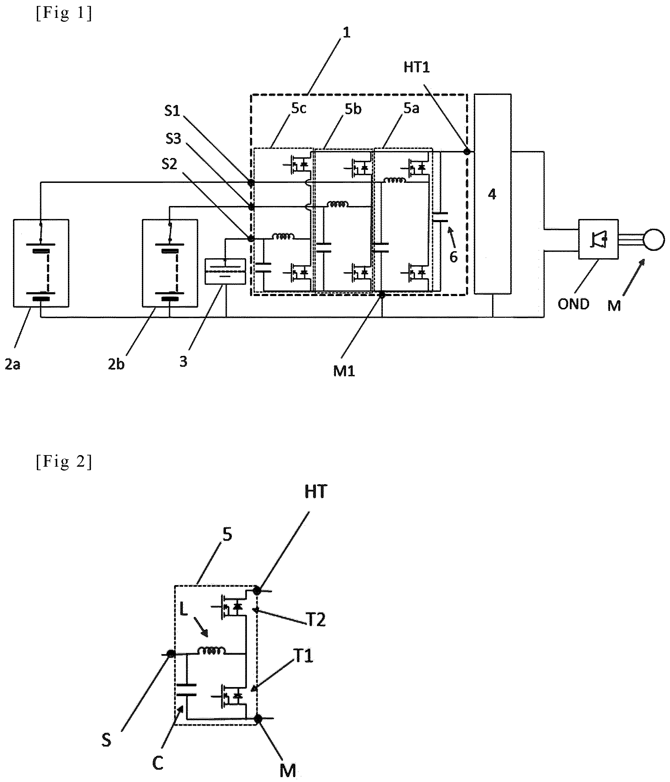

La figure 1 illustre le système d'alimentation électrique 1 compris dans un véhicule automobile électrique muni de deux batteries 2a,2b, d'une pile à combustible 3, d'un réseau haute tension 4 et d'un onduleur OND alimentant une machine électrique de traction M.

La combinaison de sources d'énergie présente sur cette figure n'est donnée qu'à titre d'exemple. L'homme du métier comprendra que toute combinaison de sources et de consommateurs d'énergie embarqués à bord d'un véhicule automobile peut être considérée.

Le système d'alimentation électrique 1 permet de gérer les sources d'énergie entre elles et de façon transparente pour le réseau haute tension du véhicule.

Dans le mode de réalisation, illustré par la figure 1, le système d'alimentation électrique 1 permet de générer une source de tension à destination du réseau haute tension 4 supérieure à la tension la plus élevée des sources 2a,2b,3.

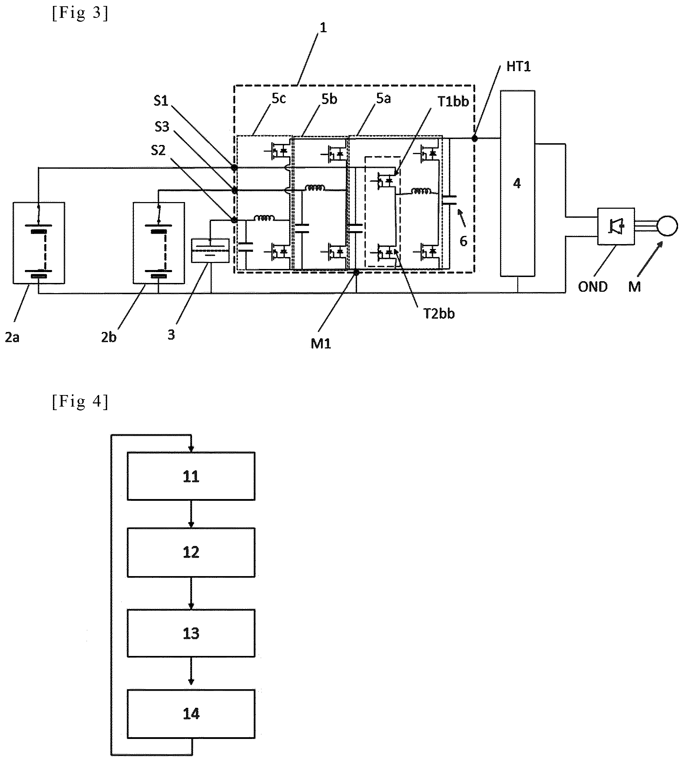

Le système d'alimentation électrique 1 comprend une connexion M1 commune à toutes les sources, une connexion HT1 au réseau haute tension du véhicule, et au moins deux connexions S1,S2,S3 à des sources de puissances. Sur la figure 3, le système d'alimentation électrique 1 est connecté à une première batterie 2a par la connexion S1, à une deuxième batterie 2b par la connexion S2, et à une pile à combustible 3 par la connexion S3.

Le système d'alimentation électrique 1 comprend un convertisseur continu-continu 5a,5b,5c pour chaque connexion à une source 2a,2b,3, les convertisseurs continu-continu 5a,5b,5c étant tous connectés en parallèle à une capacité de haute tension 6 et par la connexion HT1 au réseau haute tension 4 du véhicule.

La figure 2 illustre plus en détail un tel convertisseur continu-continu référencé 5. L'homme du métier comprendra que le convertisseur continu-continu référencé 5 est une forme générique des convertisseur continu-continu référencés 5a,5b,5c.

Le convertisseur continu-continu 5 comprend une connexion S à une source, une connexion HT au réseau haute tension du véhicule, et une connexion M, un condensateur C, deux transistors T1,T2 et une inductance L.

La connexion S à la source est connectée à une première armature du condensateur C et à une première borne de l'inductance L.

La connexion M est connectée à la deuxième armature du condensateur C et à la source d'un premier transistor T1

La connexion HT au réseau haute tension du véhicule est connectée au drain d'un deuxième transistor T2.

La deuxième borne de l'inductance L est connectée au drain du premier transistor T1 et à la source du deuxième transistor T2.

La commande d'un tel convertisseur se fait à travers la commande des grilles des transistors T1, T2, comme un convertisseur élévateur ('boost'). De telles commandes de convertisseurs font partie de l'état de l'art.

Dans un mode de réalisation alternatif illustré par la figure 3, le système d'alimentation électrique 1 présente essentiellement la même structure que celui illustré par la figure 1. Le système d'alimentation électrique 1 comprend une topologie abaisseur-élévateur (« buck-boost » en langue anglaise) permettant d'assurer cette fonction pour la batterie 2a dont la tension peut être aussi bien supérieure qu'inférieure à la tension du réseau haute tension VHT.

Plus précisément, un bras de transistors T1bb, T2bb est intercalé entre la capacité C et l'inductance L du coupleur 5a. La capacité C est connectée par une armature au drain d'un premier transistor buck-boost T1bb et par l'autre armature à la source d'un deuxième transistor buck-boost T2bb. Une borne de l'inductance L est connectée au drain du premier transistor buck-boost T2bb et à la source du deuxième transistor buck-boost T1bb.

La source d'un deuxième transistor buck-boost T2bb est connecté à la source du premier transistor T1 du coupleur 5a.

La commande du système d'alimentation électrique 1 repose sur la détermination de données d'état de chaque source (notamment la puissance produite et l'énergie disponible) puis la détermination de consignes de puissance à destination de chaque convertisseur continu-continu 5a,5b,5c en fonction d'une loi de régulation prédéterminée, de la variation de la tension du réseau haute tension, et des données d'état de chaque source. Cette solution présente l'avantage de prendre en compte les limites de l'ensemble des sources. La figure 4 illustre les principales étapes d'un tel procédé de commande du système d'alimentation électrique 1.

Au cours d'une première étape 11, on détermine une consigne de tension du réseau haute tension du véhicule. Au cours d'une deuxième étape 12, on mesure la tension du réseau haute tension (mesurée entre les points HT1 et M1) du véhicule et on détermine l'écart entre la consigne et la mesure de la tension du réseau haute tension. Au cours d'une troisième étape 13, on mesure la puissance fournie par chaque source et, au cours d'une quatrième étape 14, on détermine une consigne de puissance à fournir à chaque convertisseur de chaque source en fonction de l'écart de tension du réseau haute tension, et des mesures de puissance produites des sources.

La quatrième étape 14 repose sur un principe de priorisation par l'intermédiaire duquel la priorité est donnée à la puissance fournie par une source de puissance, par exemple la pile à combustible de la figure 3. Le convertisseur de la source priorisée assure alors une régulation de tension. Les autres sources de puissance adaptent leur puissance fournie pour compléter la puissance fournie par la source priorisée. Leurs convertisseurs assurent alors une régulation de puissance.

Dans le cas où le maintien de la tension du réseau haute tension requiert une puissance que la source reliée au convertisseur continu-continu priorisé ne peut pas fournir, celle-ci fournit un signal de surcharge de façon qu'un autre convertisseur dont la source est en capacité de fournir la puissance requise soit priorisé.

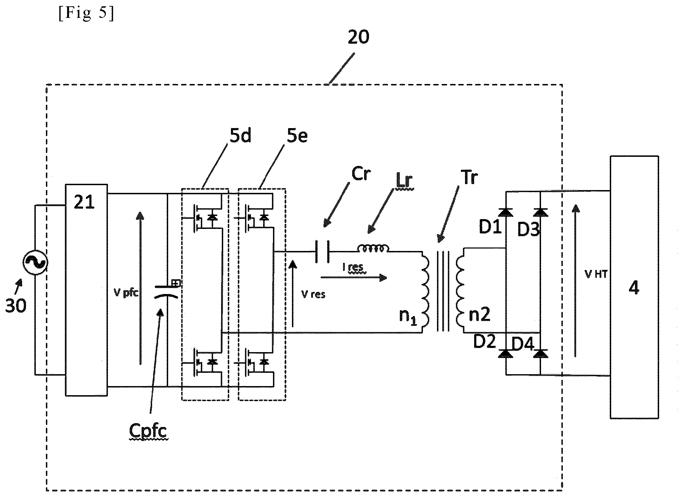

Les convertisseurs continu-continu 5 peuvent être également employés pour assurer la charge de la batterie à travers un chargeur résonant. La figure 5 illustre un tel mode de réalisation. Le chargeur résonant 20 comprend en entrée un correcteur de facteur de puissance PFC 21 connecté à un réseau d'alimentation électrique 30 et un circuit résonnant connecté en sortie à la batterie via le réseau haute tension 4 du véhicule.

Le chargeur résonant 20 est appelé convertisseur résonant LLC et comprend deux convertisseurs 5d, 5e associés à quatre diodes D1, D2, D3, D4, une capacité de résonance Cr, une inductance de résonance série Lr, un transformateur Tr comprenant n1 enroulements primaires et n2 enroulements secondaires.

Plus précisément, le chargeur résonant 20 comprend deux bras 5d,5e connectés en sortie du correcteur de facteur de puissance 21, une capacité de lissage Cpfc étant intercalée en parallèle entre le correcteur de facteur de puissance 21 et les bras 5d, 5e. Ils sont connectés en sortie à une première armature de la capacité de résonance Cr et à une borne du premier enroulement du transformateur Tr. La deuxième armature de la capacité de résonance Cr est connectée à une borne de l'inductance résonante série Lr, l'autre borne de l'inductance résonante série Lr étant connecté à l'autre borne du premier enroulement du transformateur Tr.

Les drains des premiers transistors hauts (de plus grand potentiel) de chaque bras 5d,5e sont connectés ensemble à une sortie du correcteur de facteur de puissance 21.

Les sources des deuxièmes transistors bas (de plus bas potentiel) de chaque bras 5d,5e sont connectés ensemble à une autre sortie du correcteur de facteur de puissance 21.

La source du premier transistor haut et le drain du deuxième transistor bas du premier bras 5d sont connectés à une borne du premier enroulement du transformateur Tr.

La source du premier transistor haut et le drain du deuxième transistor bas du deuxième bras 5e sont connectés à la première armature de la capacité Cr.

Une première borne du deuxième enroulement n2 du transformateur Tr est reliée à l'anode d'une première diode D1 et à la cathode d'une deuxième diode D2. Une deuxième borne du deuxième enroulement n2 est reliée à l'anode d'une troisième diode D3 et à la cathode d'une quatrième diode D4. Les cathodes de la première diode D1 et de la troisième diode D3 sont connectées ensemble à une connexion au réseau haute tension 4. Les anodes de la deuxième diode D2 et de la quatrième diode D4 sont connectées ensemble à une autre connexion au réseau haute tension 4.

Le correcteur de facteur de puissance 21 fournit une tension continue Vpfc, qui est ensuite transférée vers le réseau haute tension 4 via un le circuit résonant comprenant le transformateur Tr et le circuit résonant Cr-Lr.

Le pilotage des bras 5d,5e (qui peut être un pont complet comme sur la figure 5 ou un demi-pont et un diviseur capacitif) est en pleine onde avec un rapport cyclique de 50% dont la fréquence est régulée pour être en permanence à la résonance du circuit LC série comprenant l'inductance Lr et la capacité Cr. De fait, le courant primaire Ires est toujours en phase avec le premier harmonique de la tension onduleur Vres, et le ratio

$$\frac{V_{pfc}}{V_{HT}}$$

reste constant et identique au rapport de transformation du transformateur Tr, $V_{HT}$ étant la tension aux bornes du réseau haute tension du véhicule mesurée entre les points HT1 et M1.

La régulation de fréquence peut se faire selon deux méthodes différentes :

- En asservissant directement la phase du courant Ires, en imposant les commutations de l'onduleur lors de la détection du changement de signe du courant Ires.
- En asservissant la fréquence de commutation de l'onduleur pour obtenir le courant Ires d'amplitude maximale, et de fait être en permanence à la résonance.

Ce fonctionnement présente l'avantage d'avoir des commutations à l'amorçage et au blocage sans pertes (car à courant et tension nuls) donc avec un rendement de conversion optimal.

Toutefois, la tension de sortie $V_{HT}$ étant constante dans cette phase de recharge, les convertisseurs continu-continu 5a,5b,5c du système de gestion des flux de puissance 1 se chargent de transférer la puissance requise par chaque batterie. Durant cette phase de recharge, on pilote en temps réel le transfert de puissance à chaque batterie dans la limite de ce qu'elle peut absorber et de la puissance que peut fournir le chargeur.

Sur un réseau monophasé, la puissance instantanée est pulsée (produit de deux grandeurs sinusoïdales : tension et courant). Pour assurer une continuité de la tension $V_{HT}$, ou au moins limiter sa variation dans un gabarit qui permet en permanence aux convertisseurs continu-continu 5a,5b,5c d'assurer le transfert de puissance requise vers les batteries, il faut un stockage temporaire d'énergie qui accumule le surplus de puissance lorsque celle-ci est supérieure à la puissance moyenne et le restitue lorsque la puissance est inférieure à la puissance moyenne.

Une capacité Cpfc en sortie du correcteur de facteur de puissance 21, présentant une valeur suffisamment importante permet d'obtenir cette continuité de la tension $V_{HT}$ en s'assurant que cette variation d'énergie produise une variation de tension Vpfc acceptable pour le bon fonctionnement des convertisseurs continu-continu 5d,5e et du coupleur résonant Cr,Lr,Tr. Le principal inconvénient est le volume de cette capacité Cpfc.

Une autre solution consiste à utiliser une capacité de plus faible valeur et à la faire cycler sur une plus grande amplitude de tension au travers d'un étage de conversion, par exemple un boost à l'image de ceux utilisés pour interfacer les batteries au bus haute tension (cf. **Erreur ! Source du renvoi introuvable.**). La mise en œuvre de cette stratégie doit être intégrée à l'étage PFC de façon que sa tension de sortie Vpfc soit constante.

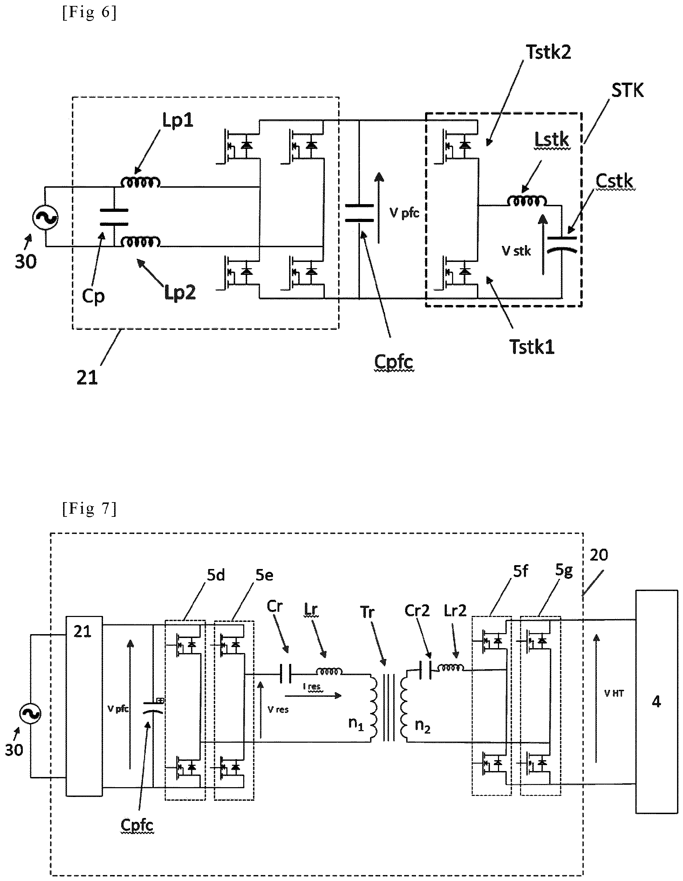

La figure 6 illustre un exemple d'un correcteur de puissance 21 auquel est adjoint une compensation de puissance instantanée STK.

Le correcteur de puissance 21 comprend deux entrées en parallèle desquelles une capacité Cp est connectée, une première borne d'une inductance Lp1,Lp2 étant connectée à chaque armature de la capacité Cp.

L'autre borne de l'inductances Lp1 étant connectée simultanément à la source d'un premier transistor haut et au drain d'un deuxième transistor bas d'un premier bras d'un pont de transistors,

L'autre borne de l'inductance Lp2 étant connectée simultanément à la source d'un premier transistor haut et au drain d'un deuxième transistor bas d'un deuxième bras d'un pont de transistors.

Les sources des deuxièmes transistors bas étant connectés à une armature de la capacité Cpfc, les drains des premiers transistors hauts étant connectés à l'autre armature de la capacité Cpfc.

La compensation de puissance instantanée STK est un convertisseur continu-continu connecté par ses sorties. Il comprend deux transistor Tstk1,Tstk2, une inductance de filtrage Lstk et une capacité de stockage Cstk.

La tension Vstk de la capacité de stockage Cstk varie sur une amplitude assez importante (typiquement entre Vpfc et Vpfc/2 ou Vpfc/3). L'inductance de filtrage Lstk en série permet de piloter le courant de charge de la capacité Cstk et donc la puissance transférée. Pour être contrôlable, la fréquence de commutation du bras chargé de la compensation de puissance (composé des transistors Tstk2 et Tstk1) doit être très supérieure à la fréquence de résonance du circuit LC composé de l'inductance de filtrage Lstk et de la capacité de stockage Cstk (typiquement au moins dix fois supérieure).

La figure 7 illustre un autre mode de réalisation d'un chargeur résonant utilisant la réversibilité du correcteur de facteur de puissance pour réinjecter de l'énergie sur le réseau d'alimentation électrique (nécessaire au déploiement de services d'injection dans le réseau d'alimentation électrique, également appelé V2G pour « Vehicle to Grid ») et/ou sur une prise domestique à l'intérieur du véhicule pour alimenter des appareils en absence de réseau électrique. Pour assurer cette prestation, le chargeur résonant 20 de la **Erreur ! Source du renvoi introuvable.** doit être symétrisé.

Le chargeur résonant 20 de la figure 5 est modifié en remplaçant le pont de diodes D1,D2,D3,D4 par deux bras à transistors 5f,5g connectés en parallèle, connectés par ailleurs en sortie au réseau haute tension 4 du véhicule et en entrée au deuxième enroulement du transformateur Tr par l'intermédiaire d'un circuit LC série comprenant une inductance Lr2 et une capacité Cr2.

Il est à noter que lorsque les transistors 5f,5g sont commandés non passant, un pont de diodes similaire à celui de la figure 7 apparait.

## Revendications

1. Procédé de commande d'un système d'alimentation électrique d'au moins une machine électrique de traction (M) d'un véhicule automobile électrique alimentée par au moins deux sources de puissance différentes (2a,2b,2c), le système d'alimentation électrique (1) étant connecté entre les sources de puissance (2a,2b,2c) et ladite au moins une machine électrique (M), le système d'alimentation électrique (1) comprenant un convertisseur continu-continu (5a,5b,5c) pour chaque source de puissance (2a,2b, 2c), les convertisseurs continu-continu (5a,5b,5c) étant connectés en parallèle à une même capacité haute tension (6) et à la au moins une machine électrique (M) associée à un onduleur, les convertisseurs continu-continu étant élévateurs de tension, l'un des convertisseurs continu-continu étant également abaisseur de tension, le procédé de commande comprenant les étapes suivantes : on détermine une consigne de tension du réseau haute tension du véhicule, on mesure la tension du réseau haute tension du véhicule et on détermine l'écart entre la consigne et la mesure de la tension du réseau haute tension, on détermine une puissance globale à transférer au réseau haute tension par un contrôle comprenant au moins une composante intégrale fonction de l'écart déterminé, on détermine une consigne de puissance à fournir pour chaque source en fonction de la puissance globale à transférer au réseau haute tension, de la capacité de chaque source et d'une pondération dépendant d'une optimisation selon un critère prédéterminé, puis , on commande les convertisseurs continu-continu en fonction de la consigne de puissance qui leur est attribuée.

2. Procédé de commande selon la revendication 1, dans lequel le critère est le rendement global ou la durabilité des sources.

3. Procédé de commande selon l'une quelconque des revendications précédentes, dans lequel on commande le convertisseur continu-continu d'une source de puissance en régulation de tension, le convertisseur continu-continu des autres sources de puissance étant commandées en régulation de puissance.

4. Procédé de commande selon l'une quelconque des revendications précédentes, le système de charge comprenant un chargeur résonant et dans lequel au moins une source de puissance est une batterie, le procédé de commande comprenant une étape de recharge de la au moins une batterie par l'intermédiaire d'un convertisseur continu-continu et du chargeur résonant connecté à un réseau d'alimentation électrique.

5. Procédé de commande selon la revendication 4, dans lequel le chargeur résonant comprend une structure symétrique, le procédé de commande comprenant une étape de pilotage du chargeur résonant permettant d'injecter une puissance électrique dans un réseau d'alimentation électrique ou une charge, connectés au chargeur résonant à partir d'au moins une source de puissance du véhicule.

6. Procédé de commande selon l'une quelconque des revendications 4 ou 5, dans lequel on réalise une compensation de puissance en pilotant un convertisseur continu-continu relié en parallèle d'une capacité (Cpfc) connectée en parallèle de la sortie d'un correcteur de facteur de puissance du chargeur résonant.

**7.** Procédé de commande selon l'une quelconque des revendications 4 à 6, dans lequel on commande le chargeur résonant avec commutation sans pertes et déphasage nul.

[Fig 1]

[Fig 2]

[Fig 3]

[Fig 4]

[Fig 5]

[Fig 6]

[Fig 7]

Europäisches
Patentamt

European
Patent Office

Office européen
des brevets

**RAPPORT DE RECHERCHE EUROPEENNE**

Numéro de la demande

**EP 22 17 6821**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2001/024105 A1 (ABE TAKAAKI [JP]) 27 septembre 2001 (2001-09-27) | 1,2 | INV. H02J1/10 |
| Y | * le document en entier * ----- | 3-7 | B60L50/75 B60L58/40 |
| Y | DI NAPOLI A ET AL: "Multiple input dc-dc power converter for fuel-cell powered hybrid vehicles", POWER ELECTRONICS SPECIALISTS CONFERENCE; [ANNUAL POWER ELECTRONICS SPECIALISTS CONFERENCE],, vol. 4, 23 juin 2002 (2002-06-23), pages 1685-1690, XP010595992, ISBN: 978-0-7803-7262-7 * page 1686; figures 1,2 * ----- | 3 | H02J7/02  ADD. B60L53/24 H02M1/00 H02M1/10 H02M1/42 H02M3/00 H02M3/158 H02M3/335 H02M7/5387 |
| Y | US 10 160 338 B1 (HYUNDAI MOTOR CO LTD [KR]; KIA MOTORS CORP [KR]) 25 décembre 2018 (2018-12-25) * figures 1,2 * ----- | 4 | |
| Y | US 2020/313441 A1 (YANG SI-HUN [KR] ET AL) 1 octobre 2020 (2020-10-01) * figure 4 * ----- | 4-7 | DOMAINES TECHNIQUES RECHERCHES (IPC) |
| Y | US 2021/016672 A1 (ZHU HUIBIN [US] ET AL) 21 janvier 2021 (2021-01-21) * figure 3A * ----- | 4 | H02J B60L H02M |
| Y | EP 3 760 473 A1 (HYUNDAI MOTOR CO LTD [KR]; KIA MOTORS CORP [KR]) 6 janvier 2021 (2021-01-06) * figures 1,2 * ----- | 5-7 | |

-/--

Le présent rapport a été établi pour toutes les revendications

| Lieu de la recherche | Date d'achèvement de la recherche | Examinateur |
|---|---|---|
| Munich | 30 juin 2022 | Tchegho Kamdem, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**RAPPORT DE RECHERCHE EUROPEENNE**

Europäisches Patentamt
European Patent Office
Office européen des brevets

Numéro de la demande

EP 22 17 6821

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | H. TAO ET AL: "Family of multiport bidirectional DC?DC converters", IEE PROCEEDINGS: ELECTRIC POWER APPLICATIONS., vol. 153, no. 3, 1 janvier 2006 (2006-01-01), page 451, XP055715206, GB ISSN: 1350-2352, DOI: 10.1049/ip-epa:20050362 * figure 5 *<br><br>----- | 1 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 30 juin 2022 | Tchegho Kamdem, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 2 de 2

## EP 4 099 532 A1

### ANNEXE AU RAPPORT DE RECHERCHE EUROPEENNE
### RELATIF A LA DEMANDE DE BREVET EUROPEEN NO.

EP 22 17 6821

30-06-2022

| Document brevet cité au rapport de recherche | | Date de publication | Membre(s) de la famille de brevet(s) | | Date de publication |
|---|---|---|---|---|---|
| US 2001024105 | A1 | 27-09-2001 | DE | 10114011 A1 | 25-10-2001 |
| | | | JP | 2001275205 A | 05-10-2001 |
| | | | US | 2001024105 A1 | 27-09-2001 |
| US 10160338 | B1 | 25-12-2018 | CN | 109149733 A | 04-01-2019 |
| | | | DE | 102017221303 A1 | 27-12-2018 |
| | | | KR | 20190001625 A | 07-01-2019 |
| | | | US | 2018370369 A1 | 27-12-2018 |
| US 2020313441 | A1 | 01-10-2020 | CN | 111756084 A | 09-10-2020 |
| | | | DE | 102019218194 A1 | 01-10-2020 |
| | | | KR | 20200115785 A | 08-10-2020 |
| | | | US | 2020313441 A1 | 01-10-2020 |
| US 2021016672 | A1 | 21-01-2021 | AU | 2019447744 A1 | 09-09-2021 |
| | | | CN | 113412566 A | 17-09-2021 |
| | | | EP | 3915179 A1 | 01-12-2021 |
| | | | US | 2021016672 A1 | 21-01-2021 |
| | | | WO | 2020242444 A1 | 03-12-2020 |
| EP 3760473 | A1 | 06-01-2021 | CN | 112172509 A | 05-01-2021 |
| | | | EP | 3760473 A1 | 06-01-2021 |
| | | | KR | 20210005754 A | 15-01-2021 |
| | | | US | 2021001738 A1 | 07-01-2021 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016079603 A
- US 4415959 A
- FR 3100941